# EUROPÄISCHE PATENTSCHRIFT

(11) **EP 3 169 643 B1**
(45) Veröffentlichungstag und Bekanntmachung des Hinweises auf die Patenterteilung: **11.12.2019**
(21) Anmeldenummer: 15749717.3
(22) Anmeldetag: 16.07.2015
(51) Int. Cl.: C04B 28/34, E04C 1/41, E04B 1/74

(54) **VERWENDUNG EINES DÄMMMATERIALS UND HERSTELLUNGSVERFAHREN DAZU**
USE OF AN INSULATING MATERIAL AND A METHOD FOR PRODUCING SAME
UTILISATION D'UN MATÉRIAU ISOLANT ET SON PROCÉDÉ DE FABRICATION

(30) Priorität: 18.07.2014 DE 102014010520
(43) Veröffentlichungstag der Anmeldung: 24.05.2017
(73) Patentinhaber: IBV Holding GmbH, 49078 Osnabrück (DE)
(72) Erfinder: BREKER, Ronald, 41836 Hückelhoven (DE)
(74) Vertreter: Epping - Hermann - Fischer
(86) Internationale Anmeldenummer: PCT/EP2015/001474
(87) Internationale Veröffentlichungsnummer: WO 2016/008591

(56) Entgegenhaltungen:
- EP-A1- 0 861 216
- WO-A2-2004/015005
- CN-A- 101 973 750
- CN-A- 102 452 830
- FR-A1- 2 885 629

## Beschreibung

Die Erfindung betrifft die Verwendung eines Dämmmaterials nach Anspruch 1 und ein Verfahren zu dessen Herstellung.

Dämmmaterialien werden in großem Umfang insbesondere im Bauwesen, im Fahrzeugwesen und in der Gerätetechnik zur Isolierung gegen äußere Einflüsse wie Schallbelastung, Wärmebelastung und auch Brandbelastung eingesetzt. Neben den in großem Umfang eingesetzten Wärmedämmmaterialien sind in bestimmten Bereichen (auch) Brandschutzmaterialien im Hinblick auf ein kritisches Anforderungsprofil erforderlich, um etwa im Schiffsbau oder in brandgefährdeten Bereichen des Anlagenbaus und des Tief- und Hochbaus entsprechenden Auflagen nachzukommen.

In dieser Hinsicht hat sich eine hochtemperaturfeste anorganische Formmasse ("inorganic resin composition") für Brandschutzzwecke als überaus vorteilhaft herausgestellt, welche in der EP 0 861 216 B1 beschrieben ist. Der Inhalt dieser Patentschrift wird zur Erläuterung des Materials, das auch handelsüblich unter der oberbegrifflichen Beschreibung einer "Phosphatkeramik" verfügbar ist, im vorliegenden Fall vollinhaltlich zum Gegenstand der Erläuterung der Erfindung einbezogen. Eine besondere Nutzung dieses Materials in Verbindung mit Glasfasermatten zu Brandschutzzwecken findet sich in der DE 10 2010 035 037 A1. Vorveröffentlichungen im englischen Sprachraum umschreiben das Material mit "wollastonite based chemical bonded phosphate ceramic composites". Im Handel sind die Ausgangsmaterialien von der Fa Symbion N.V. in Zonhoven, Belgien, unter der Bezeichnung "Vubonite" in 2-Komponentenform erhältlich.

Aus der vorstehend durch Referenz einbezogenen EP 0 861 216 B1 ist ersichtlich, dass das durch Veröffentlichung im englischen Sprachraum mit "Phosphatkeramik" umschriebene Material nicht im Sinne einer Tonkeramik oder eines durch einen Brenn- oder Sinterprozess herzustellenden Materials ist, sondern durch exotherme Reaktion der in der Patentschrift genannten drei Komponenten entsteht. Dabei ist das mit einer sauren wässrigen Lösung einer Phosphorsäure wie etwa der Orthophosphorsäure gebildete Metallphosphat als Komponente A vorzugsweise als Aluminiumphosphat, Zirconiumphosphat, Magnesiumphosphat, Zinkphosphat, Kalziumphosphat oder Eisenphosphat oder einer Mischung daraus vorzusehen. Als "Oxibor"-Verbindung kommen verschiedene Bor-Sauerstoffverbindungen einschließlich zugehöriger Hydrat-Formen und sonstiger Verbindungen in Betracht. Insbesondere ist dabei Borax (Dinatriumtetraborat) angesprochen. Bei den Wollastonit-Verbindungen kommt sowohl synthetisch hergestelltes - reines - Wollastonit wie auch gefundenes Wollastonit in Betracht, wobei insbesondere letzteres in kalzinierter- oder nicht-kalzinierter Form vorliegenden kann und oft geringe Bestandteile von Fremdmaterialien einschließt. Aus den vorgenannten Komponenten ist ein anorganisches Material hoher Festigkeit und vor allem auch hoher Hitzebeständigkeit herzustellen.

Solchen speziellen Brandschutzmaterialien haftet allerdings der Mangel an, dass diese eng auf Brandschutzzwecke zugeschnitten sind und zu sonstigen baulichen Anforderungen, insbesondere auch zur Wärmedämmung, wenig beitragen. Insofern sind Wärmedämmmaßnahmen zusätzlich vorzusehen, wobei übliche Wärmedämmplatten u. dgl. Wand- oder Geräteausrüstungen mit leichtem Aufbau regelmäßig wenig geeignet sind, Zusatzstrukturen zu tragen. Allgemein ist die Aufmontage von Schalen oder Platten aus Feuerschutzmaterialien mit einigem Aufwand verbunden.

Die Druckschrift CN 101 973 750 A beschreibt ein anorganisches wärmeisolierendes Material enthaltend 15 bis 37 Teile Basismaterial, 45 bis 70 Prozent Pigment und Füllstoff und 9 bis 26 Teile Hilfsmittel, wobei das Basismaterial 10 bis 20 Teile Phosphorsäure, 3 bis 8 Teile Aluminiumhydroxid, 2 bis 8 Teile Aluminium-Silber-Aufschlämmungshilfsmittel, 0,5 bis 5 Teile Silicat und 1 bis 5 Teile Natriumcarboxymethylcellulose umfasst.

Die Druckschrift FR 2 885 629 A1 beschreibt ein Verfahren zum Behandeln einer hohlen Gebäudestruktur gegen Korrosion, wobei ein Quellmittel in einen Hohlraum einer hohlen Struktur durch eine untere Öffnung injiziert wird. Das Quellmittel enthält eine wässerige Lösung aus Metallphosphat, eine Oxyboronverbindung und einer Wollastonitverbindung.

Aufgabe der Erfindung ist es, eine Verwendung eines Dämmmaterials für Brandschutzzwecke zu schaffen, wobei das Dämmmaterial sich anwendungsgerecht formen und anpassen lässt und insbesondere auch anwenderseitig einfach, schnell und zuverlässig anzubringen ist.

Gemäß der Erfindung wird diese Aufgabe durch die Verwendung eines Dämmmaterials nach Anspruch 1 gelöst. Weiter wird die Aufgabe auch durch ein Verfahren zur Herstellung eines solchen Dämmmaterials mit den Verfahrensschritten des Anspruchs 11 gelöst.

Das erfindungsgemäß verwendete Dämmmaterial erlangt mit einem überwiegenden Volumenanteil eines Leichtbaustoffs oder Leichtbaustoffgemisches Wärmedämmeigenschaften, wie sie als Kälte- oder Wärmeschutz bzw. für Einsparungen an Heizleistung oder Kühlleistung in der Bautechnik, der Gerätetechnik, der Anlagentechnik oder der Fahrzeugtechnik breithin gefragt sind. Bekannte Wärme-Dämmstoffe, die seit langem praxisgerecht unter den Gesichtspunkten der Haltbarkeit, der Verarbeitbarkeit, der Preiswürdigkeit und der Dämmeigenschaften entwickelt worden sind, kommen bei entsprechend großem Volumenanteil als Wärmeisolation zur Geltung.

Dieses Dämmmaterial erhält aber trotz eines volumenmäßig geringeren Anteils an Phosphatkeramik auch sehr gute Brandwiderstandseigenschaften, da die hochtemperaturfeste Phosphatkeramik eine tragende Stützstruktur für den Leichtbaustoffanteil des Dämmmaterials liefert. Diese Stützstruktur kann als schalenförmige Struktur oder Skelettstruktur ausgebildet sein. Wesentlich ist, dass die Phosphatkeramik eine zusammenhängende Hüll- und/oder Gitterstruktur bildet, die einer Beflammung Stand hält und mit der auch der Leichtbaustoff , ggf. verkohlt, gehalten wird.

Um eine solche Stützstruktur zu erhalten, wird der Leichtbaustoff vorzugsweise in einer Granulatform mit Körnern oder Perlen vorgesehen und über die Phosphatkeramik im Dämmmaterial eingebettet. Eine solche Stützstruktur beeinträchtigt die Wärmedämmung des Leichtbaustoffs jedenfalls nicht in schwerwiegender Weise, obwohl die Phosphatkeramik allein - in kompakter Verwendung - regelmäßig geringere Wärmedämmwerte bereitstellen würde. Die zu einer Hüll- und/oder Gitterstruktur reduzierte Menge an Phosphatkeramik führt nicht zu Wärmebrücken in einem Ausmaß, die die Wärmedämmeigenschaften des Leichtbaustoffs umgehen.

In umgekehrter Hinsicht sind aber die in eine Stützstruktur der Phosphatkeramik eingebetteten Leichtbaustoffe durchaus in der Lage, auch einen wesentlichen Beitrag zur Brandwiderstandsfähigkeit des Dämmmaterials zu liefern. Dies gilt von vornherein für hier beschriebene aber nicht beanspruchte anorganische Leichtbaustoffe wie etwa expandierte Perlite oder Mikro-Glashohlkugeln, die von Haus aus weder leicht entzündlich noch überhaupt brennbar sind. Dies gilt aber auch für Leichtbaustoffe aus organischem Material wie expandiertem Polystyrol (PS-E) oder expandiertem Polyolefin wie zu Perlen aufgeschäumtem Polypropylen (PP-E) oder Polyethylen (PE-E). Insbesondere die von der Verfügbarkeit, Preiswürdigkeit und der geringen Dichte umfänglich zur Wärmedämmung eingesetzten Polystyrol-Hartschaummaterialien sind im vorliegenden Fall als organischer Leichtbaustoff bevorzugt und geeignet. Die als begrenzt einzustufenden Eigenschaften dieses Materials im Hinblick auf Brandverzögerung, entsprechend denen eine mit expandiertem Polystyrol gedämmte Wand bei Beflammung von der gedämmten Seite erst mit Verzögerung vorgegebene hohe Temperaturen auf der Rückseite erscheinen lässt, sind insbesondere mit Abtropfen des verbrennenden Materials oder auch mit bedenklichen Rauchgaserscheinungen verbunden. Die Stützstruktur/Mantelstruktur aus Phosphatkeramik behindert nicht nur das Abbrennen von (brennbaren) organischen Leichtbaustoffen, sondern hält diese auch in der Stützstruktur fest, so dass auch grundsätzlich brennbare Leichtbaustoffe zur Brandwiderstandsfähigkeit beitragen.

Der Ausbildung solcher Stützstrukturen kommt auch entgegen, dass viele der Leichtbaustoffe von Haus aus oder ohne aufwendige Aufbereitung in Granulatform bzw. Perlenform verfügbar sind. Dies gilt für die beispielsweise genannten aber nicht beanspruchten anorganischen Materialien Mikro-Glashohlkugeln, verfügbar mit einem Anteil unzerstörter Hohlkugeln von über 80, typischerweise 90% und einem Kugeldurchmesser bis etwa 120 µm. Dies gilt ebenso für Leichtbaustoffe wie expandierte Perlite, etwa im Bereich von Leichtbeton in großen Mengen eingesetzt. Ebenso ist expandiertes Polystyrol üblicherweise in loser Körner- oder Perlenform verfügbar und wird in die im Handel gebräuchliche Pattenform erst aus schüttfähigem Material zusammengebacken. Ein ähnlich zu verwendendes Korkgranulat wird demgegenüber erst durch Zerkleinerung größerer Korkstützen gewonnen.

Diese lose Form von Körnern oder Perlen wird mit einer Stützstruktur und/oder Mantelstruktur von Phosphatkeramik versehen, indem zweckmäßig die Körner oder Perlen mit der aushärtbaren Mischung der flüssigen Vormaterialien der Phosphatkeramik die sehr gute Bindungseigenschaften aufweist, umhüllt bzw. verbunden werden. Mit der Aushärtung des Phosphatkeramik-Materials bildet sich eine tragende Stützstruktur und/oder Mantelstruktur des angestrebten Dämmmaterials.

Das Verfahren zur Herstellung des Dämmmaterials sieht dementsprechend vor, dass zunächst die Ausgangsbestandteile der Phosphatkeramik angemischt werden, die sich praxisgerecht aus zwei für sich reaktionsfrei zu lagernden handelsüblichen Komponenten in einer flüssigen und einer pulverförmigen Form zusammenmischen lassen und dann in einer Standzeit von 10 bis 40 Minuten mit einer exothermen Reaktion aushärten, sofern die Reaktion nicht durch Zusatzmittel beeinflusst wird. Innerhalb der Standzeit ist das Phosphatkeramikmaterial zur Strukturbildung jedenfalls gründlich in den Anteil des Leichtbaustoffs einzumischen, um eine gewünschte feine einheitliche Struktur zu erhalten.

Vorzugsweise wird die Phosphatkeramik vor dem Erhärten durch schaumbildende Mittel und /oder Maßnahmen aufgeschäumt. In dieser Hinsicht kann eine Formbildung durch Aufschlagen erfolgen. Vorzugsweise wird aber ein geeignetes Treibmittel wie beispielsweise Wasserstoffperoxyd (H₂O₂) der Anmischung für die Phosphatkeramik beigegeben, das schon zu Beginn des exothermen Aushärtungsprozesses aufschäumt und damit das Volumen zur Benetzung der Leichtbaustoffe ausweitet. Mit dem Aufschäumen wird auch die Temperatur und die Reaktionsgeschwindigkeit der Mischung zu einer Verlängerung der Standzeit reduziert. Überdies wird die Viskosität des Strukturmaterials vor dem Aushärten herabgesetzt, was die Benetzung der Leichtbaustoffe gleichfalls fördert.

Grundsätzlich kann das Dämmmaterial fortlaufend oder auch chargenweise großvolumig verarbeitet werden, um etwa handelsübliche Platten oder Stangen fertig geformt oder auch konfektionierbare Stränge herzustellen. Das Material hat zwar im Vergleich zu herkömmlichen Wärmedämmplatten, insbesondere solchen aus expandiertem Polystyrol (PS-E), eine gute Festigkeit und Eigensteifigkeit, ist aber leicht zu bearbeiten.

In vielen Fällen werden aber handelsgängige Produktformen des Dämmmaterials wie Platten, Stangen oder Formkörper in einer Form erstellt, die das Schwundmaß des Dämmmaterials beim Aushärten berücksichtigt und die maßhaltige Produkte aus dem Dämmmaterial entnehmen lässt. Grundsätzlich kann die Anmischung der Phosphatkeramik und die Vermischung mit dem Leichtbaustoff-Anteil in einer solchen Form erfolgen. Im allgemeinen aber ist die Eingabe in entsprechende Formen aus einem Mischer - innerhalb der Standzeit der Mischung für die aushärtende Phosphatkeramik - vorzusehen.

Die Formgebung für das Dämmmaterial kann gleichfalls in einem fortlaufenden Verfahren erfolgen, wenn es, beispielsweise für die Herstellung von Platten oder Stangen, zunächst zu einem fortlaufenden Strang geformt und von einem solchen Strang nach dem Erhärten abgeteilt wird.

Bei der Formung von strangförmigem Halbzeug wie auch bei der Formgebung in Formen kann das Produkt ein- oder mehrseitig mit oberflächengestaltenden Schichten versehen werden. So kann zu einer vorteilhaft einfachen Verbindung mit dem Dämmmaterial zuvor in eine Form eine Lage von Fasermatten, etwa von Glas- oder Mineralfasermatten, eingelegt sein, die sich vor dem Aushärten nass in nass mit dem Dämmmaterial verbindet. Besser noch ist eine Schicht von Fasermatten, die bereits ihrerseits zuvor mit noch nicht ausgehärteter Phosphatkeramik getränkt ist und sich somit leicht mit der Struktur des Dämmmaterials verbindet. Eine solche Schicht liefert eine geglättete und verfestigte Oberfläche für die zu erzielenden Formkörper, die auch Verschraubungen oder sonstigen Verbindungselementen zur Anbringung des Dämmmaterials Halt an Wänden, Decken oder Strukturen gibt und andererseits das Anbringen von Bildern, Einrichtungsgegenständen u. dgl. an Wandplatten aus diesem Dämmmaterial ermöglicht. Insbesondere ist aber eine solche Schicht wirkungsvoll als integrierte Barriere für die Brandwiderstandsfähigkeit des Materials nützlich. Eine mehrseitige Ausstattung von Plattenmaterial mit Fasermatten erleichtert die (seitenunabhängige) Verwendung, wenngleich eine sparsamere Ausstattung mit Fasermatten an nur einer Plattenoberfläche bedarfsgerecht ausreichen kann.

Die Aufschichtung von Fasermatten auf das Dämmmaterial in einem Herstellungsgang ist auf diese Weise nicht nur bei Dämmplatten in Einzelformung, sondern auch bei durchlaufenden Strängen möglich. Desgleichen sind diese Fasermatten auch in Sonderformen für komplexer geformte Formkörper zur integrierten Einbeziehung in das Produkt vorzusehen.

Grundsätzlich versteht es sich, dass eine oberflächengestaltende Schicht auch mehrseitig vorgesehen werden kann, indem etwa Fasermatten über Seitenränder einer Form hinweg gezogen oder oberseitig auf eine mit dem aushärtenden Dämmmaterial gefüllte Form ausgedrückt werden.

Es versteht sich, dass die oberflächengestaltende Schicht vorteilhaft auch schon bei der Formgebung für das Dämmmaterial mit einer speziellen, für den Gebrauch ausgestatteten, glatten, wasserfesten und/oder gefärbten oder gemusterten Deckschicht ausgestattet sein kann, um ein "finish" für eine Wand- oder Deckengestaltung zu erhalten.

Auf diese Weise hergestellte Halbfertig- oder Fertigprodukte sind auf bekannte und übliche Weise durch Befestigungselemente, durch Kleben u. dgl. an ihren vorgegebenen Einsatzorten anzubringen, wenn sie nicht selbst schon als Formkörper eigenständig zu verwenden sind. In der für Brandschutz- und Wärmedämmung besonders häufig anzusetzenden Anwendung des Dämmmaterials in Plattenform ergibt sich die Möglichkeit, eine einstückige solide Platte, die erforderlichenfalls nach Bedarf in der Grundfläche noch zuzuschneiden ist, als für unterschiedliche Anforderungen hinreichendes Dämmbauteil vorzusehen, wobei die Oberfläche bereits durch eine oberflächengestaltende Schicht verfestigt und/oder farblich und grafisch gestaltet sein kann.

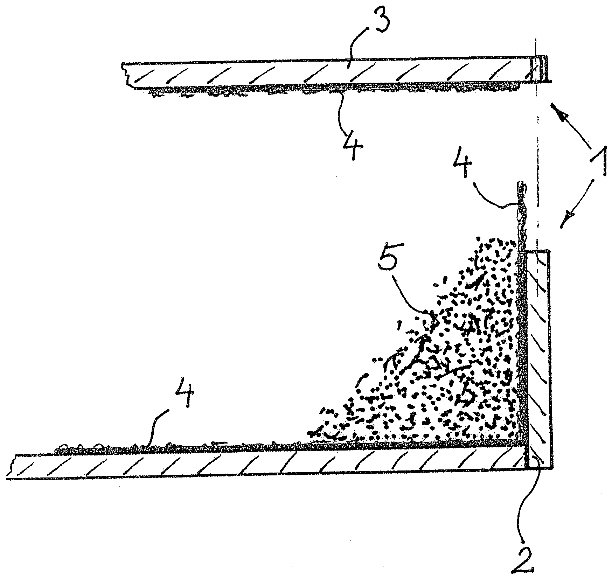

Ein Ausführungsbeispiel der Erfindung wird nachfolgend unter Bezugnahme auf die anliegende Zeichnung näher erläutert. In der einzigen Figur der Zeichnung ist schematisch ein Vertikalschnitt durch einen Randbereich einer zum Öffnen gefüllten Form für die Herstellung von plattenförmigem Dämmmaterial, teilweise mit Material zur Bildung einer Platte gefüllt, dargestellt.

Die in der Zeichnung insgesamt mit 1 bezeichnete Form ist als in Quaderform schließbarer Kasten mit einem oben offenen Unterteil 2 und einem Deckel 3 ausgebildet, wobei letzterer bündig und hinreichend druckfest und druckdicht auf das Unterteil 2 aufzusetzen ist, wenn die Form gefüllt ist und die Befüllung zu einer Plattenform aushärtet.

Innenseitig in das Unterteil sind mehrere Lagen von Mineralfasermaterial 4, insbesondere mit Basalt-/Vulkanfaser eingelegt, die in vielen Fällen unorientiert als Wirrfaservliese vorzusehen sind, bei besonderen Anforderungen an eine Oberflächentextur oder an die Biege- oder Zugfestigkeit der herzustellenden Platte aber auch orientiert als Gewebelagen oder als in eine vorgegebene Richtung orientierte Parallelfaserlagen, ggf. gekreuzt übereinandergelegt vorgegeben sein können. Die Faserlagen 4 sind sowohl bodenseitig gelegt wie auch an den aufstehenden Innenflächen des Unterteils 2 der Form 1 hochgezogen und nach oben überstehend geführt. Desgleichen sind im vorliegenden Fall Faserlagen 4 unter dem Deckel 3 zur Bildung einer Oberseite der hier zu formenden Platte angebracht.

In den freien Innenraum des Unterteils 2 wird ein aushärtbares Material aus schüttfähigem bzw. partikelförmig verteilbarem Material formfüllend eingebracht, wie dies in der Zeichnung als Teilfüllung 5 angedeutet ist. Im vorliegenden Fall besteht die Füllung volumenmäßig überwiegend aus Perlen von expandiertem Polystyrol (PS-E), typischerweise in einer Kugelform mit einem Durchmesser von 1 bis 8 mm.

Dieser lose und leichte Dämmstoff ist mit einem aushärtbaren Binder benetzt, der sich entsprechend der Europäischen Patentschrift EP 0 861 216 B1 ergibt und der aus den zu vermischenden Ausgangsstoffen ein hochfestes, zähes und temperaturfestes Material bildet. Handelsfähige Produkte dieser Zusammensetzung (z.B. "vubonit") werden in Zwei-Komponenten-Form bereitgestellt und für die jeweilige Anwendung gemischt.

Im vorliegenden Fall wird beim Anmischen des Phosphatkeramik-Binders noch Wasserstoffperoxyd (H₂O₂) als Treibmittel zugesetzt, welches den PhosphatKeramik-Binder bei der exothermen Reaktion der Komponenten aufschäumt und damit die Durchmischung und Verteilung des Binders zur Benetzung des losen Leichtbaumaterials fördert. Dabei lässt sich der Anteil an Phosphatkeramik im Sinne eines günstigen Materialpreises, eines geringen Gewichts und guter Dämmeigenschaften des zu erzielenden Materials sehr weit verringern, wobei die Phosphatkeramik aber immer noch schalen- oder gitterförmige Stützstrukturen zusammenhängender Art bildet, die auch einem grundsätzlich brennbaren Polystyrol-Material im Brandfall eine hohe Widerstandsfähigkeit verleiht.

Überdies wird durch das Treibmittel die Temperatur der Phosphatkeramik beim Aushärten, die sonst bis zu 100°C betragen kann, durch das Aufschäumen der Treibmittel herabgesetzt. Im vorliegenden Fall verläuft der Aushärtungsprozess bei einer Temperatur von ca. 35°C, was insbesondere bei organischen Leichtbaustoff-Füllungen Verarbeitungsrisiken und Produktschäden vermeidet.

Hier sind die Komponenten der Phosphatkeramik in einem Mengenverhältnis angemischt, bei dem auf 7.000 g Phosphatkeramik 280 g Wasserstoffperoxyd zugemischt werden, was einem Anteil des Treibmittels von 4% entspricht. Diese Mischung wird auf eine partikelförmige Leichtbaustoff-Menge von 43,7 l expandierten Polystyrols (PS-E) gegeben, intensiv zu einer feinen Benutzung vermischt und, wie dargestellt, in die Form 1 eingegeben, in die bereits die die Oberflächen bildenden Fasermatten 4 eingelegt sind.

Die Fasermatten 4 sind ihrerseits auch schon unmittelbar zuvor mit dem Binder, d.h. mit der frischen Mischung der Komponenten der aushärtbaren Phosphatkeramik und des Treibmittels in Form von Wasserstoffperoxyd getränkt, um damit einen festen Faserverbund innerhalb der Fasermatten und einen festen Verbund mit der Füllung aus mit Phosphatkeramik benetztem Leichtbaustoff zu erzielen.

Bei dem exothermen Aushärteprozess der Phosphatkeramik und dem Aufschäumen des Treibmittels entsteht in der geschlossenen Form ein von der Form 1 aufzufangender Überdruck, der sich bedarfsweise durch die Dosierung der Treibmittelmenge einregulieren lässt.

Mit dem Aushärten bilden sich in der Form 1 Platten einer Plattenstärke von beispielsweise 100 mm und einer Fläche von 1.000 x 1.000 mm, die mit der Oberflächen bildenden Außenschicht aus den Faserlagen 4 auch glatt und fest ist, so dass die erzielte Platte auch in der Oberfläche belastbar, beispielsweise für Befestigungsmittel, Dübel und dergleichen benutzbar ist. Es versteht sich, dass bereits in einer Form außerhalb der Faserlagen 4 auch ggf. gewünschte dekorative, glatte oder farblich vorgegebene Flächen als zusätzliche Außenschichten eingelagert sein können, die sich mit den Faserlagen 4 verbinden, wenn diese mit der bindefähigen Phosphatkeramik durchtränkt sind.

Entscheidend für die Dämmeigenschaften in Bezug auf Wärmedämmung und auf Brandschutzdämmung ist aber die innenliegende Füllung 5 mit Leichtbaustoffmaterial, gehalten durch eine Struktur der Phosphatkeramik, die den Leichtbaustoff stützt und hält und ihm neben den Wärmedämmeigenschaften auch eine hohe Brandschutzeignung verleiht.

## Patentansprüche

1. Verwendung eines Dämmmaterials für Brandschutzzwecke,
- wobei das Dämmmaterial einen Anteil an einer anorganischen Formmasse enthält, die als Phosphatkeramik aus einer sauren wässrigen Lösung eines Phosphorsäure enthaltenen Metallphosphats, einer Oxybor-Verbindung und einer Wollastonit-Verbindung entsteht, und
- wobei es einen überwiegenden Volumenanteil eines organischen Leichtbaustoffs oder Leichtbaustoffgemisches enthält, der in eine tragende Stützstruktur des Anteils an Phosphatkeramik eingebettet ist.

2. Verwendung des Dämmmaterials nach Anspruch 1, wobei der Anteil an Phosphatkeramik eine zusammenhängende Hüll- oder Gitterstruktur bildet.

3. Verwendung des Dämmmaterials nach Anspruch 1 oder 2, **dadurch gekennzeichnet, dass** der Leichtbaustoff in loser Form von Körnern oder Perlen im Dämmmaterial eingebettet ist.

4. Verwendung des Dämmmaterials nach einem der Ansprüche 1 bis 3, wobei der Volumenanteil des Leichtbaustoffs organisches Material in Form von Schaumstoffpartikeln umfasst.

5. Verwendung des Dämmmaterials nach Anspruch 4, wobei das organische Material Perlen von expandiertem Polystyrol enthält.

6. Verwendung des Dämmmaterials nach Anspruch 4 oder 5, wobei das organische Material Perlen zumindest eines aufgeschäumten Polyolefins enthält.

7. Verwendung des Dämmmaterials nach einem der Ansprüche 1 bis 6, wobei es als Platte, Schale, Stange, Rohr oder dgl. Formkörper geformt ist.

8. Verwendung des Dämmmaterials nach Anspruch 7, wobei der Formkörper an zumindest einer seiner Außenflächen eine oberflächengestaltende Schicht aufweist.

9. Verwendung des Dämmmaterials nach Anspruch 8, wobei die Schicht eingebettete Fasermatten umfasst.

10. Verwendung des Dämmmaterials nach einem der Ansprüche 1 bis 9, wobei der Anteil an Phosphatkeramik eine Schaumstruktur aufweist.

11. Verfahren zur Herstellung von Dämmmaterial nach einem der Ansprüche 1 bis 10 für Brandschutzzwecke, wobei die Phosphatkeramik aus den Ausgangsbestandteilen einer sauren wässrigen Lösung eines Phosphorsäure enthaltenen Metallphosphats, einer Oxybor-Verbindung und einer Wollastonit-Verbindung angemischt und innerhalb der Standzeit vor dem Erhärten mit einem überwiegenden Volumenanteil des organischen Leichtbaustoffs oder Leichtbaustoffgemisches in Form schüttfähiger Partikel gemischt wird.

12. Verfahren nach Anspruch 11, wobei die Mischung für die Phosphatkeramik vor dem Erhärten durch schaumbildende Mittel und/oder Maßnahmen aufgeschäumt ist.

13. Verfahren nach Anspruch 11 oder 13, wobei das Dämmmaterial vor dem Erhärten in eine Form eingegeben wird.

14. Verfahren nach Anspruch 13, wobei die Form zumindest bereichsweise mit Materialien zur Bildung einer oberflächengestaltenden Schicht ausgelegt ist.

15. Verfahren nach Anspruch 14, wobei die Schicht Glasfasermatten umfasst, die mit Phosphatkeramik getränkt worden sind.

## Claims

1. Use of an insulating material for the purpose of fire protection,
- wherein the insulating material contains a fraction of an inorganic molding material, which is formed as a phosphate ceramics from an acidic aqueous solution of a metal phosphate containing phosphoric acid, an oxyboron compound and a wollastonite compound, and
- wherein it contains a predominant volume fraction of an inorganic lightweight construction material or lightweight construction material mixture, which is embedded into a load-bearing supporting structure of the fraction of phosphate ceramics.

2. Use of the insulating material according to claim 1, wherein the fraction of phosphate ceramics forms a contiguous envelope or grid structure.

3. Use of the insulating material according to claim 1 or 2, **characterized in that** the lightweight material is embedded in the insulating material in loose form, as grains or beads.

4. Use of the insulating material according to one of claims 1 to 3, wherein the volume fraction of the lightweight construction material comprises organic material in the form of foamed particles.

5. Use of the insulating material according to claim 4, wherein the organic material contains beads of expanded polystyrene.

6. Use of the insulating material according to claim 4 or 5, wherein the organic material contains beads of at least a foamed polyolefin.

7. Use of the insulating material according to one of claims 1 to 6, wherein it is in the shape of a panel, bowl, rod, pipe or similar molded body.

8. Use of the insulating material according to claim 7, wherein the molded body comprises a surface-finishing layer on at least one of its outer faces.

9. Use of the insulating material according to claim 8, wherein the layer includes embedded fiber mats.

10. Use of the insulating material according to one of claims 1 to 9, wherein the fraction of phosphate ceramics exhibits a foam structure.

11. Method for producing an insulating material according to one of claims 1 to 10 for the purpose of fire protection, wherein the phosphate ceramics is mixed from the starting ingredients of an acidic aqueous solution of a metal phosphate containing phosphoric acid, an oxyboron compound and a wollastonite compound, and is mixed, within the retention time, with a predominant volume fraction of the organic lightweight construction material or lightweight construction material mixture in the form of pourable particles.

12. Method according to claim 11, wherein prior to the curing, the mixture for the phosphate ceramics is expanded by means of foaming agents and/or measures.

13. Method according to claim 11 or 13, wherein prior to curing, the insulating material is placed in a mold.

14. Method according to claim 13, wherein the mold is, at least in regions, lined with materials for forming a surface-finishing layer.

15. Method according to claim 14, wherein the layer includes glass fiber mats impregnated with phosphate ceramics.

## Revendications

1. Utilisation d'un matériau isolant pour la protection contre l'incendie,
- dans laquelle le matériau isolant contient une fraction de masse à mouler inorganique, qui est produite sous la forme de céramique de phosphate à partir d'une solution aqueuse acide d'un phosphate métallique contenant de l'acide phosphorique, d'un composé d'oxy-bore et d'un composé de wollastonite, et
- dans laquelle il contient une fraction volumique prédominante d'un matériau de construction légère organique ou d'un mélange de matériaux légère organiques, qui est intégrée dans une structure de support porteuse de la fraction de céramique de phosphate.

2. Utilisation du matériau isolant selon la revendication 1, dans laquelle la fraction de céramique de phosphate forme une enveloppe continue ou une structure réticulaire continue.

3. Utilisation du matériau isolant selon la revendication 1 ou 2, **caractérisée en ce que** le matériau de construction légère est intégrée dans le matériau isolant sous la forme de grains ou de perles en vrac.

4. Utilisation du matériau isolant selon l'une des revendications 1 à 3, dans laquelle la fraction volumique du matériau de construction légère comprend un matériau organique sous la forme de particules de matériau en mousse.

5. Utilisation du matériau isolant selon la revendication 4, dans laquelle le matériau organique contient des perles de polystyrène expansé.

6. Utilisation du matériau isolant selon la revendication 4 ou 5, dans lequel le matériau organique contient des perles d'au moins une polyoléfine qui a été amenée à l'état de mousse.

7. Utilisation du matériau isolant selon l'une des revendications 1 à 6, dans laquelle celui-ci est façonné en forme de plaque, de bol, de barre, de tube ou de corps moulé similaire.

8. Utilisation du matériau isolant selon la revendication 7, dans laquelle le corps moulé comporte, sur au moins une de ses surfaces extérieures, une couche finissant la surface.

9. Utilisation du matériau isolant selon la revendication 8, dans laquelle la couche comprend des nappes en fibres intégrées.

10. Utilisation du matériau isolant selon l'une des revendications 1 à 9, dans laquelle la fraction de céramique de phosphate présente une structure en mousse.

11. Procédé de fabrication de matériau isolant selon l'une des revendications 1 à 10 pour la protection contre l'incendie, dans lequel la céramique de phosphate est mélangée à partir des éléments de départ d'une solution aqueuse acide d'un phosphate métallique contenant de l'acide phosphorique, d'un composé d'oxy-bore et d'un composé de wollastonite et est mélangée pendant le temps de séjour avant le durcissement avec une fraction volumique prédominante de le matériau de construction légère organique ou du mélange de matériaux légère organiques sous la forme de particules déversables.

12. Procédé selon la revendication 11, dans lequel le mélange pour la céramique de phosphate est amené à l'état de mousse avant le durcissement par des moyens et/ou des mesures moussants.

13. Procédé selon la revendication 11 ou 13, dans lequel le matériau isolant est introduit dans un moule avant le durcissement.

14. Procédé selon la revendication 13, dans lequel le moule est pavé au moins sur certaines parties avec des matériaux permettant de former une couche formant la surface.

15. Procédé selon la revendication 14, dans lequel la couche comprend des nappes en fibres de verre qui ont été imprégnées de céramique de phosphate.
